# EUROPÄISCHE PATENTSCHRIFT

(11) **EP 3 659 202 B1**
(45) Veröffentlichungstag und Bekanntmachung des Hinweises auf die Patenterteilung: **30.08.2023**
(21) Anmeldenummer: 18753064.7
(22) Anmeldetag: 23.07.2018
(51) Int. Cl.: H01M 10/42, H02J 7/00, H01M 10/44, B25B 21/00, H02J 9/00, B25F 5/00, H01M 50/202, H01M 50/247

(54) **BYPASS-SCHALTUNG AN EINEM AKKUMULATOR**
BYPASS SWITCH ON AN ACCUMULATOR
CIRCUIT DE DÉRIVATION SUR UN ACCUMULATEUR

(30) Priorität: 27.07.2017 EP 17183450
(43) Veröffentlichungstag der Anmeldung: 03.06.2020
(73) Patentinhaber: Hilti Aktiengesellschaft, 9494 Schaan (LI)
(72) Erfinder: HAUSER, Klaus, 86830 Schwabmünchen (DE); CANDUSSIO, Michael, 82140 Olching (DE); MAYER, Stefan, 85221 Dachau (DE); KOSCHECK, David, 86163 Augsburg (DE); FORSTNER, Markus, 86899 Landsberg (DE)
(74) Vertreter: Hilti Aktiengesellschaft Corporate Intellectual Property
(86) Internationale Anmeldenummer: PCT/EP2018/069857
(87) Internationale Veröffentlichungsnummer: WO 2019/020539

(56) Entgegenhaltungen:
- DE-A1-102014 203 476
- US-A1- 2005 073 282

## Beschreibung

Die vorliegende Erfindung betrifft einen Akkumulator für eine Werkzeugmaschine enthaltend wenigstens eine Energiespeicherzelle sowie eine Schaltvorrichtung.

Kabellose Werkzeugmaschine können zur Stromversorgung mit einem Akkumulator, auch Akku genannt, betrieben werden. Bei der kabellosen Werkzeugmaschine kann es sich beispielsweise um einen Akku-Schrauber handeln.

Akkumulatoren enthalten gewöhnlich eine Anzahl an Speicherzelle für elektrische Energie auf. Zur Kontrolle eines Lade- bzw. Entladevorgangs der Speicherzellen, bei dem die Speicherzellen entweder mit einer elektrischen Energie geladen oder die elektrische Energie aus den Speicherzellen genommen wird, verfügt ein moderner Akkumulator über eine Steuerungselektronik. Die Speicherzellen werden auch als Akkuzellen bezeichnet.

Wenn eine derartige akkubetriebene Werkzeugmaschine längere Zeit nicht in Verwendung ist, werden der Akkumulator sowie die elektrischen Verbraucher der Werkzeugmaschine, wie z.B. der Elektromotor oder die Steuerungselektronik für gewöhnlich vollständig ausgeschaltet, um elektrischen Strom von dem Akkumulator zu sparen. Die elektrischen und auch elektronischen Verbraucher der Werkzeugmaschine befinden sich dann einem Ruhezustand. In diesem Ruhezustand fließt demnach kein elektrischer Strom von dem Akkumulator zu den elektrischen Verbrauchern der Werkzeugmaschine. Die elektrische Spannung bleibt in den einzelnen Speicherzellen des Akkus erhalten.

Um jedoch die Werkzeugmaschine wieder in Betrieb zu nehmen oder zumindest in einen Bereitschaftszustand (auch Stand-by-Modus genannt) zu versetzen, benötigt die Steuerungselektronik der Werkzeugmaschine einen sogenannten Wake-up-Call. Der Wake-up-Call kann auch als Aufweckruf bezeichnet werden. Nachdem die Steuerungselektronik der Werkzeugmaschine durch den Wake-up-Call wieder in einen Bereitschaftsmodus versetzt wurde, können auch die restlichen Komponenten der Werkzeugmaschine, insbesondere der Elektromotor der Werkzeugmaschine, wieder in den Bereitschaftsmodus gebracht werden, sodass die gesamte Werkzeugmaschine wieder in Betreib genommen werden kann.

Für das Erzeugen eines Wake-up-Calls in der Steuerungselektronik ist es jedoch notwendig, dass eine gewisse Stromstärke von den Speicherzellen des Akkumulators zu der Steuerungselektronik der Werkzeugmaschine fließt. Diese zum Erzeugen eines Wake-up-Calls benötigte Stromstärke ist für gewöhnlich relativ gering und sehr viel geringer als die maximale von allen Speicherzellen zur Verfügung stellbare Stromstärke.

Problematisch ist jedoch, dass bei den Akkumulatoren gemäß dem Stand der Technik nicht vorgesehen ist, eine entsprechend geringe Stromstärke für einen Wake-up-Call in der Steuerungselektronik der Werkzeugmaschine zur Verfügung zu stellen, wenn sich der Akkumulator zum Energiesparen im Ruhezustand befindet und dabei vollständig ausgeschaltet ist. DE 10 2014 203 476 A1 offenbart ein Verfahren zum Betreiben eines Batteriesystems zum Versorgen eines Verbrauchers mit elektrischer Leistung, wobei eine elektronische Schalteinheit einen Hauptstrompfad mit einem Hauptschalter und einen dazu parallel angeordneten Nebenstrompfad mit einem Nebenwiderstand und einem Nebenschalter aufweist und wobei der Verbraucher über den Haupt- und den Nebenstrompfad mit elektrischer Leistung versorgt wird, beim Detektieren eines sicherheitskritischen Zustands jedoch der Hauptstrompfad geöffnet wird.

US 2005/0073282 A1 offenbart einen Batteriepack für eine drahtlose Werkzeugmaschine, welcher eine Batteriezelle und eine mit dieser in Reihe geschaltete Strombegrenzungseinrichtung aufweist. Aufgabe der vorliegenden Erfindung ist es daher, einen Akkumulator für eine Werkzeugmaschine enthaltend wenigstens eine Energiespeicherzelle sowie eine Schaltvorrichtung bereitzustellen, mit der die vorstehend genannten Probleme gelöst werden kann.

Die Aufgabe wird gelöst durch den Gegenstand des unabhängigen Anspruchs 1. Vorteilhafte Ausführungsformen des erfindungsgemäßen Gegenstands sind in Anspruch 2 enthalten.

Erfindungsgemäß ist vorgesehen, dass eine Bypass-Schaltung enthalten ist, die in einem ersten und zweiten Modus betreibbar ist, wobei in dem ersten Modus sich die Bypass-Schaltung in einem Ruhezustand befindet, sodass über die Schaltvorrichtung ein elektrischer Strom mit einem ersten Stromwert von der wenigstens einen Energiespeicherzelle zu der Werkzeugmaschine gelangt und wobei in dem zweiten Modus sich die Bypass-Schaltung in einem Betriebszustand befindet, sodass über die Bypass-Schaltung ein elektrischer Strom mit einem zweiten Stromwert von der wenigstens einen Energiespeicherzelle zu der Werkzeugmaschine gelangt, wobei der erste Stromwert größer ist als der zweite Stromwert, und wobei die Bypass-Schaltung einen Komparator enthält zum Vergleichen eines von der Werkzeugmaschine benötigten Stromwerts mit einem hinterlegten Stromschwellwert, sodass mittels eines Schaltelements die Bypass-Schaltung in den ersten Modus gebracht wird, wenn der von der Werkzeugmaschine benötigte Stromwert den Schwellwert übersteigt, und die Bypass-Schaltung in den zweiten Modus gebracht wird, wenn der von der Werkzeugmaschine benötigte Stromwert den Schwellwert unterschreitet.

Hierdurch kann der Akku in einen energiesparenden Ruhezustand versetzt werden, bei dem gleichzeitig genügend Strom für einen eventuellen Wake-up-Call zur Verfügung gestellt werden kann.

Entsprechend einer vorteilhaften Ausgestaltungsform der vorliegenden Erfindung kann es möglich sein, dass die wenigstens eine Energiespeicherzelle in Form einer Lithium-Ionen-Zelle ausgestaltet ist.

Durch die Ausgestaltung der wenigstens eine Energiespeicherzelle in Form einer Lithium-Ionen-Zelle wird eine Energiequelle mit einer besonders hohen volumenbezogenen Energiedichte sowie einer besonders langen Lebensdauer bereitgestellt.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine Seitenansicht einer Werkzeugmaschine mit einem erfindungsgemäßen an der Werkzeugmaschine angeschlossenen Akkumulator; und
- Fig. 2: eine Schaltzeichnung einer Schaltvorrichtung des Akkumulators mit der Bypass-Schaltung.

### Ausführungsbeispiele:

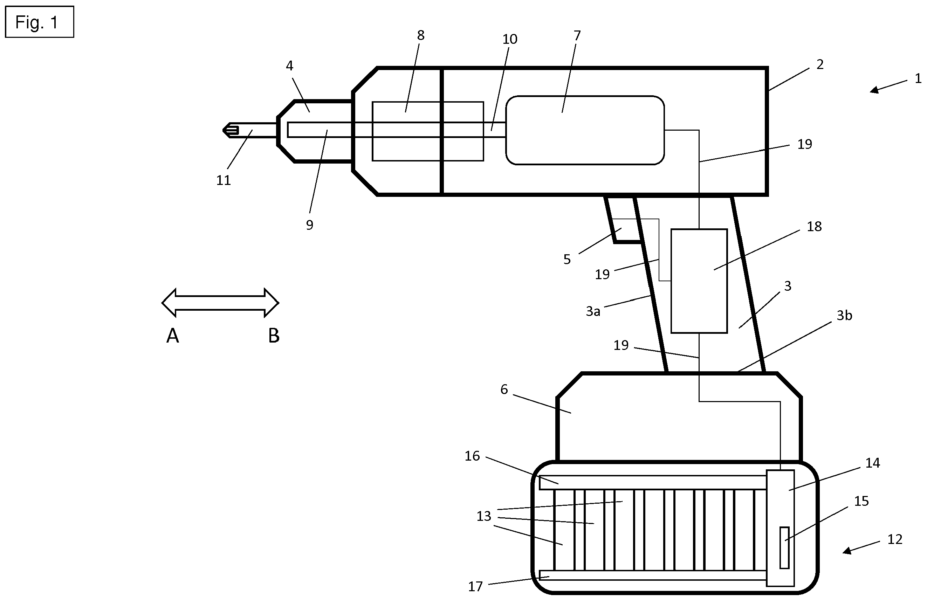

In Figuren 1 ist eine Werkzeugmaschine 1 dargestellt. Die Werkzeugmaschine 1 ist beispielsweise in Form eines Akku-Schraubers ausgestaltet und enthält im Wesentlichen ein Gehäuse 2, ein Handgriff 3, eine Werkzeugaufnahme 4, einen Aktivierungsschalter 5 sowie ein Fussteil 6.

Im Inneren des Gehäuses 2 ist ein Elektromotor 7, ein Getriebe 8, eine Antriebswelle 9 und eine Abtriebswelle 10 positioniert. Der Elektromotor 7 ist über die Abtriebswelle 10 mit dem Getriebe 8 verbunden. Das Getriebe 8 ist weiterhin über die Antriebswelle 9 mit der Werkzeugaufnahme 4 verbunden. Der Elektromotor 7 dient zum Erzeugen eines Drehmoments, welches über die Abtriebswelle 10, das Getriebe 8 und die Antriebswelle 9 auf die Werkzeugaufnahme 4 übertragen werden kann. Die Werkzeugaufnahme 4 ist an einem vorderen Ende 2a des Gehäuses 2 der Werkzeugmaschine 1 positioniert. Mit der Werkzeugaufnahme 4 kann ein Werkzeug 11, beispielsweise in Form eines Schraubendreherklinge (auch Bit genannt), aufgenommen und gehalten werden. Die Werkzeugaufnahme 4 überträgt das Drehmoment von der Antriebswelle 9 auf das als Bit ausgestaltete Werkzeug 11, um eine Schraube in einen Werkstoff zu schrauben. Das Werkstoff und die Schraube sind in den Figuren nicht dargestellt.

Am einem unteren Ende des Gehäuses 2 ist der Handgriff 3 befestigt. Der Handgriff 3 weist insbesondere eine Vorderseite 3a und ein unteres Ende 3b auf. An der Vorderseite 3a ist der Aktivierungsschalter 5 positioniert.

Des Weiteren ist an dem unteren Ende 3b des Handgriffs 3 das Fussteil 6 befestigt. An einem unteren Ende 6a des Fussteils 6 ist wiederum ein Akkumulator 12 (auch Akku genannt) lösbar positioniert.

Der Akku 12 dient zum Versorgen der Werkzeugmaschine 1 mit elektrischer Energie. Der Akku 12 enthält hierzu im Wesentlichen eine Anzahl an Energiespeicherzellen 13 (auch Akku-Zellen genannt) sowie eine Steuerung 14. Die Steuerung 14 enthält wiederum eine Schaltvorrichtung 15. Die Schaltvorrichtung 15 dient dazu, die Stromversorgung von dem Akku zu der Werkzeugmaschine 1 zu unterbrechen.

Die einzelnen Akku-Zellen 13 sind über eine obere und untere Zellenhalterung 16, 17 mechanisch und elektrisch mit der Steuerung 14 verbunden, sodass elektrische Energie von den einzelnen Energiespeicherzellen 13 zu der Steuerung 14 fließen kann.

In dem Inneren des Handgriffs 3 ist eine Steuerungsvorrichtung 18 für die Werkzeugmaschine 1 vorgesehen. Die Steuerungsvorrichtung 18 ist über Leitungen 19 mit dem Elektromotor 7, dem Aktivierungsschalter 5 sowie der Steuerung 14 des Akkus 12 verbunden. Die Leitungen 19 dienen dabei zum Übertragen von Signalen und elektrischem Strom.

So kann durch ein Bewegen des Aktivierungsschalters 5 in Richtung B ein Signal von dem Aktivierungsschalter 5 an die Steuerungsvorrichtung 18 gesendet werden, wodurch die Steuerungsvorrichtung 18 wiederum ein Signal an die Steuerung 14 des Akkus 12 sendet. Durch das an die Steuerung 14 gesendete Signal wird elektrische Energie mit einem bestimmten Stromwert von den Akku-Zellen 13 zu den elektrischen Verbrauchern der Werkzeugmaschine 1 und insbesondere den Elektromotor 7 gesendet. Um ein Signal entsprechend der Wegstrecke des Aktivierungsschalters 5 in Richtung B an die Steuerungsvorrichtung 18 zu senden, enthält der Aktivierungsschalter 5 ein nicht gezeigtes Potentiometer.

Wenn sich der Aktivierungsschalter 5 wieder in Richtung A bewegt, wird ein entsprechendes Signal mit Hilfe des Potentiometers an die Steuerungsvorrichtung 18 gesendet, sodass kein Strom mehr von den Akku-Zellen 13 zu der Werkzeugmaschine 1 fließt.

In dem Falle, dass die Werkzeugmaschine 1 für eine gewisse Zeit nicht in Verwendung ist, wird die Werkzeugmaschine 1 und der Akku 12 vollständig ausgeschaltet. Hierzu wird die Schaltvorrichtung 15 so geschaltet, dass der Stromfluss von den Akku-Zellen 13 zu der Werkzeugmaschine unterbrochen ist. Sowohl Werkzeugmaschine 1 als auch Akku 12 befinden sich dann in einem Ruhezustand.

Um die Werkzeugmaschine 1 und insbesondere die Steuerungsvorrichtung 18 von dem Ruhezustand wieder in einen Stand-by-Zustand (Bereitschaftsmodus) bzw. einen Aktivierungszustand zu bringen, benötigt die Steuerungsvorrichtung 18 einen sogenannten Wake-up-Call. Der Wake-up-Call kann auch als Aufweckruf bezeichnet werden. Durch den Wake-up-Call wird die Steuerungsvorrichtung 18 bzw. die einzelnen Komponenten der Steuerungsvorrichtung 18 wieder in einen Zustand gebracht, in dem die Steuerungsvorrichtung 18 die Werkzeugmaschine 1 und insbesondere den Elektromotor 7 wieder mit elektrischen Strom von den Akku-Zellen 13 versorgen kann.

Für den Wake-up-Call wird elektrische Energie mit einen gewissen Stromwert von den Akku-Zellen 13 benötigt. Der Stromwert für einen Wake-up-Call ist für gewöhnlich relativ gering.

Damit die Steuerungsvorrichtung 18 der Werkzeugmaschine 1 auch in einen ausgeschalteten Zustand bzw. in dem Ruhezustand mit einem entsprechenden Stromwert für einen Wake-up-Call versorgen kann, enthält die Schaltvorrichtung 15 der Akku-Steuerung 14 eine Bypass-Schaltung 20.

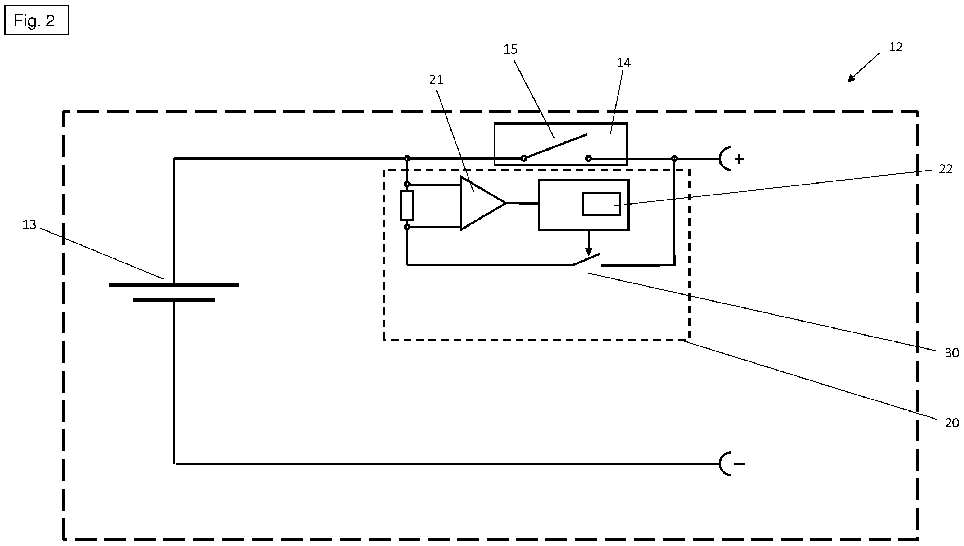

Wie in Figur 2 zu erkennen ist, ist die Bypass-Schaltung 20 so an der Schaltvorrichtung 15 positioniert, dass eine Umgehung (d.h. Bypass) für den elektrischen Strom aus den Akku-Zellen 13 um die Schaltvorrichtung 15 zu der Werkzeugmaschine 1 gegeben ist. Die Bypass-Schaltung 20 enthält des Weiteren ein Schaltelement 30, einen Komparator 21 und ein Speicherelement 22.

Der Komparator 21 dient zum Vergleichen eines von der Werkzeugmaschine 1 benötigten Stromwerts mit einem in dem Speicherelement 22 hinterlegten Stromschwellwert.

Die Bypass-Schaltung 20 ist so ausgestaltet, dass diese einen ersten Betriebsmodus und zweiten Betriebsmodus einnehmen kann. Das Schaltelement 30 dient dazu, die Bypass-Schaltung 20 in den ersten oder zweiten Betriebsmodus zu bringen.

In dem ersten Betriebsmodus befindet sich die Bypass-Schaltung 20 in einem Ruhezustand, sodass ein hoher Stromwert von den Akku-Zellen 13 zu der Werkzeugmaschine 1 fließen kann. Die Schaltvorrichtung 15 ist dabei geschlossen (nicht in den Figuren dargestellt). Der Strom von den Akku-Zellen 13 fließt dabei nicht durch die Bypass-Schaltung 20 und es ist möglich, dass ein maximaler Stromwert von den Akku-Zellen 13 abgerufen werden kann. Dieser hoher Stromwert ist dabei höher als der Stromwert, der für einen Wake-up-Call benötigt wird.

In dem zweiten Modus befindet sich die Bypass-Schaltung 20 in einem Betriebszustand, bei dem eine elektrische Energie mit einem zweiten Stromwert von den Akku-Zellen 13 durch die Bypass-Schaltung 20 zu der Werkzeugmaschine 1 fließen kann. Der zweite Stromwert ist dabei niedriger als der erste Stromwert und ausreichend für einen Wake-up-Call in der Steuerungsvorrichtung 18 der Werkzeugmaschine 1.

Wie bereits vorstehend beschrieben ist der Komparator 21 ausgestaltet, um den von der Werkzeugmaschine 1 benötigten Stromwert mit einem Stromschwellwert zu vergleichen. Die Werkzeugmaschine 1 benötigt dabei entweder einen niedrigen oder einen hohen Stromwert. Der niedrige Stromwert ist für einen Wake-up-Call benötigt, wenn sich die Werkzeugmaschine 1 in einem Ruhezustand befindet. Der niedrige Stromwert ist dabei so niedrig, dass die Akku-Zellen 13 nicht merklich entladen werden.

Der hohe Stromwert wird hingegen benötigt, um die Werkzeugmaschine 1 in den normalen Betriebszustand zu versetzen, sodass der Elektromotor 7 ein Drehmoment erzeugen kann.

## Patentansprüche

1. Akkumulator (12) für eine Werkzeugmaschine (1) enthaltend wenigstens eine Energiespeicherzelle (13) sowie eine Schaltvorrichtung (15),
**dadurch gekennzeichnet, dass** eine Bypass-Schaltung (20) mit einem Schaltelement (30) enthalten ist, die in einem ersten und zweiten Modus betreibbar ist, wobei die Bypass-Schaltung (20) sowie die Schaltvorrichtung (15) parallel zueinander angeordnet sind, wobei in dem ersten Modus sich die Bypass-Schaltung (20) in einem Ruhezustand befindet, sodass über die Schaltvorrichtung (15) ein elektrischer Strom mit einem ersten Stromwert von der wenigstens einen Energiespeicherzelle (13) zu der Werkzeugmaschine (1) gelangt und
wobei in dem zweiten Modus sich die Bypass-Schaltung (20) in einem Betriebszustand befindet, sodass über die Bypass-Schaltung (20) ein elektrischer Strom mit einem zweiten Stromwert von der wenigstens einen Energiespeicherzelle (13) zu der Werkzeugmaschine (1) gelangt, und wobei der erste Stromwert größer ist als der zweite Stromwert,
wobei die Bypass-Schaltung (20) einen Komparator (21) enthält zum Vergleichen eines von der Werkzeugmaschine (1) benötigten Stromwerts mit einem in einem Speicherelement (22) hinterlegten Stromschwellwert, sodass mittels eines Schaltelements (30) die Bypass-Schaltung (20) in den ersten Modus gebracht wird, wenn der von der Werkzeugmaschine (1) benötigte Stromwert den Schwellwert übersteigt, und die Bypass-Schaltung (20) in den zweiten Modus gebracht wird, wenn der von der Werkzeugmaschine (1) benötigte Stromwert den Schwellwert unterschreitet.

2. Akkumulator (12) nach Anspruch 1,
**dadurch gekennzeichnet, dass** die wenigstens eine Energiespeicherzelle (13) in Form einer Lithium-Ionen-Zelle ausgestaltet ist.

## Claims

1. Rechargeable battery (12) for a machine tool (1) containing at least one energy storage cell (13) and also one switching apparatus (15),
**characterized in that** said rechargeable battery contains a bypass circuit (20) which has a switching element (30) and can be operated in a first and second mode, wherein the bypass circuit (20) and the switching apparatus (15) are arranged in parallel with one another,
wherein the bypass circuit (20) is in an inoperative state in the first mode, so that an electric current with a first current value passes from the at least one energy storage cell (13) to the machine tool (1) via the switching apparatus (15), and
wherein the bypass circuit (20) is in an operating state in the second mode, so that an electric current with a second current value passes from the at least one energy storage cell (13) to the machine tool (1) via the bypass circuit (20), and wherein the first current value is greater than the second current value,
wherein the bypass circuit (20) contains a comparator (21) for comparing a current value which is required by the machine tool (1) with a current threshold value stored in a memory element (22), so that, by means of a switching element (30), the bypass circuit (20) is switched to the first mode when the current value which is required by the machine tool (1) exceeds the threshold value and the bypass circuit (20) is switched to the second mode when the current value which is required by the machine tool (1) falls below the threshold value.

2. Rechargeable battery (12) according to Claim 1,
**characterized in that** the at least one energy storage cell (13) is designed in the form of a lithium-ion cell.

## Revendications

1. Accumulateur (12) destiné à une machine-outil (1), ledit accumulateur contenant au moins une cellule de stockage d'énergie (13) et un dispositif de commutation (15), **caractérisé en ce qu'**un circuit de dérivation (20) pourvu d'un élément de commutation (30) est inclus qui peut être utilisé dans un premier mode et un deuxième mode, le circuit de dérivation (20) et le dispositif de commutation (15) étant disposés parallèlement l'un à l'autre ,
dans le premier mode, le circuit de dérivation (20) étant dans un état de repos de sorte qu'un courant électrique d'une première intensité passe de l'au moins une cellule de stockage d'énergie (13) à la machine-outil (1) par le biais du dispositif de commutation (15) et
dans le deuxième mode, le circuit de dérivation (20) étant dans un état de fonctionnement de sorte qu'un courant électrique d'une deuxième intensité passe de l'au moins une cellule de stockage d'énergie (13) à la machine-outil (1) par le biais du circuit de dérivation (20), et la première intensité étant supérieure à la deuxième intensité,
le circuit de dérivation (20) contenant un comparateur (21) destiné à comparer une intensité requise par la machine-outil (1) à une intensité seuil stockée dans un élément de mémorisation (22) de sorte que, au moyen d'un élément de commutation (30), le circuit de dérivation (20) soit mis dans le premier mode si l'intensité requise par la machine-outil (1) devient supérieure à l'intensité seuil, et le circuit de dérivation (20) soit mis dans le deuxième mode si l'intensité requise par la machine-outil (1) devient inférieure à l'intensité seuil.

2. Accumulateur (12) selon la revendication 1,
**caractérisé en ce que** l'au moins une cellule de stockage d'énergie (13) est conçue sous la forme d'une cellule à ions lithium.
